# EUROPEAN PATENT SPECIFICATION

(11) **EP 1 230 692 B1**
(45) Date of publication and mention of the grant of the patent: **28.06.2006**
(21) Application number: 00985022.3
(22) Date of filing: 03.11.2000
(51) Int. Cl.: H01M 2/02

(54) **GALVANIC CELL COMPRISING A METAL CAN, AND METHODS FOR MAKING SUCH A CELL**
GALVANISCHE ZELLE MIT METALLISCHEM GEHÄUSE UND HERSTELLUNGSVERFAHREN FÜR SOLCH EINE ZELLE
PILE GALVANIQUE COMPRENANT UNE BOITE METALLIQUE, ET PROCEDES DE FABRICATION D'UNE TELLE PILE

(30) Priority: 05.11.1999 US 163565 P
(43) Date of publication of application: 14.08.2002
(73) Proprietor: Thomas Steel Strip Corporation, Warren, Ohio 44485 (US)
(72) Inventor: STOSKY, Robert, Stanley, Masury, OH 44438 (US); VAN HAASTRECHT, Gijsbertus, Cornelis, 1969 KT Heemskerk (NL)
(74) Representative: Kruit, Jan
(86) International application number: PCT/EP2000/011230
(87) International publication number: WO 2001/033650

(56) References cited:
- EP-A- 0 944 119
- WO-A-00/11740
- PATENT ABSTRACTS OF JAPAN vol. 015, no. 118 (E-1048), 22 March 1991 (1991-03-22) -& JP 03 008256 A (SHARP CORP), 16 January 1991 (1991-01-16)
- PATENT ABSTRACTS OF JAPAN vol. 1999, no. 02, 26 February 1999 (1999-02-26) -& JP 10 302734 A (YUASA CORP), 13 November 1998 (1998-11-13)

## Description

The invention relates to a method for producing a galvanic cell comprising two electrodes and an electrolyte within a closed case, in which the electrodes are each connected to an external pole and in which the case comprises a metal can which is separated from the electrolyte by an electrically insulating organic layer, in which the can is formed from a sheet of metal material.

Galvanic cells of this type are often used as rechargeable batteries. The invention shall more specifically be described with regard to the application for rechargeable batteries, although it shall not be restricted thereto. The invention can thus also be applied to the Nickel Metal Hydride (NiMh) type cell.

This type of galvanic cells differs from for instance non-rechargeable batteries in which in many cases the metal can forms one of the electrodes.

Currently nickel coated steel is used to make cylindrical cans for various types of rechargeable batteries, such as NiCd batteries. The cans are then produced by deepdrawing of nickel coated steelplate.

In the case of the NiCd rechargeable battery, the positive and negative electrodes with a separator in between are folded into a roll pack. Current collection at the negative electrode is performed at the bottom end of the can through the use of a negative current collector. This is usually resistance welded at the bottom of the roll pack to the negative electrode which is shifted slightly exposing the steel grid to which the collector is attached/welded. The current collection of the positive electrode is performed at the positive end cap, which is connected to the positive electrode via a welded positive current connector.

The positive end cap of a rechargeable battery is historically a metal disk surrounded by a plastic ring-shaped containment ring. The plastic ring prevents electrical contact between the positive pole cap and the battery can. Present technology dictates the use of a tar like substance (brai) to seal the plastic ring to the metal wall of the can and prevent creeping of the electrolyte.

A problem with the current batterydesign is that iron from the battery case can dissolute in the electrolyte, such as KOH, which iron thereupon can migrate and deposit within the electrodes. The result of this phenomenon is the poisoning of the cell and loss of performance, which in turn results in a reduced cycle life.

This problem has been solved by using a metal can which has been separated from the electrolyte by an electrically insulating organic layer. The organic layer can be designed to chennically separate the electrolyte and the metal can, whereby it is prevented that iron from the metal can can dissolute in the electrolyte and migrate to the electrodes. A battery having a metal can with an electrically insulating organic layer is shown in the abstract of Japanese patent application, publication number 03008256.

It is an object of the invention to provide a method for producing a galvanic cell with an electrically insulating organic layer inside its metal can, which can be made in a relatively simple and cheap way.

Although the creeping of electrolyte through the seal between the positive end cap and the battery can is usually prevented by the use of a substance such as brai, the application of such a substance can lead to complications in the assembly and in the use and disposal of the batteries. Over time brai can lose some of its sealing effectiveness due to drying and pressure creep leakage. It therefore is a further object of this invention to prevent the use of substances such as brai.

According to the invention in the production of the galvanic cell of the known type the organic layer is applied by lacquering, paint coating, spray coating or film coating of the sheet of metal material. By coating the sheet metal material before the cans are formed by for instance deep drawing, it is easy and cheap to coat the sheet, and it is not necessary to coat each metal can on its inside, which would be cumbersome and time consuming.

Preferably, the method comprises the steps of preparing a metal can with an organic layer covering the inner surfaces of the cell, which layer is affixed to at least the bottom of said inner surface, filling the metal can with a positive and a negative electrode, connecting these electrodes by means of current collectors to external poles, providing an electrolyte inside the cell and closing the cell, wherein prior to providing the electrolyte, the negative current collector is electrically connected to the inner side of the metal can by spot-welding through the organic layer. This inner side may be the bottom of the can. In the same way, the positive current collector can be electrically connected to the inner side of the end cap by spot welding through the organic layer, if the organic layer is present on the inner side of the end cap.

According to a further improvement of a method of making a galvanic cell of a type as described above, the method comprises the steps of preparing a metal can with an organic layer covering the inner surface of the can, filling the metal can with a positive and a negative electrode, connecting these electrodes by means of current collectors to external poles, providing an electrolyte inside the cell and closing the cell by means of a cap-shaped positive pole which is, electrically isolated, affixed to the upper rim of the metal can, wherein the outer rim of the cap-shaped positive pole is provided with a plastic ring-shaped element, that the upper rim of the metal can is formed to a closeable seat for the cap-shaped positive pole, wherein upon closing the cell said positive pole is placed on said seat whereby the organic layer separates the positive pole and the rim portion of the metal can, whereupon the rim portion of the metal can is forced around the plastic ring-shaped element and heat is supplied to the forced rim portion of the metal can in order to locally soften the organic layer until the plastic rim-shaped element and the forced rim portion are affixed to each other.

The invention is further illustrated by some figures-
Figure 1 shows a longitudinal section of a rechargeable battery,
Figure 2 shows detail II of Fig. 1 on a larger scale.
Figure 3 shows the negative current collector of Fig. 1.

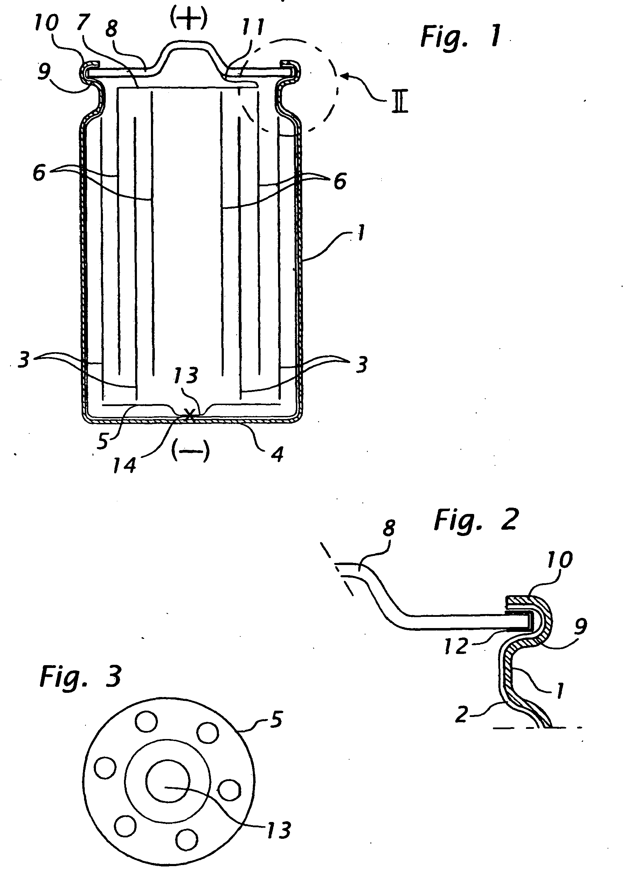

In Fig. 1 reference numeral 1 indicates a steel can which has been obtained by deepdrawing of nickel coated steel sheet material. Metal can 1 is provided at its inner surface with an organic layer 2. In the case as shown the steel sheet material has been coated with an organic film consisting of, for instance, polypropylene (PP) or PET. The coated steel sheet has been deepdrawn to form the can 1 in a way generally known in the art. A positive electrode 6 and a negative electrode 3 have been folded in a roll pack with an isolating separator (not shown) in between them. Electrodes 3 and 6 are somewhat shifted relatively in axial direction. In that way the negative electrode can be connected to negative current collector 5 and the positive electrode to positive current collector 7. Negative current collector 5 has been shaped as shown in Fig. 1 and in a top-view in Fig. 3.

A central portion 13 has been deepened, which rests on the bottom 4 of metal can 1. By spotwelding, indicated by cross 14 the central portion 13 has been welded to the bottom 4. The weld penetrates the coating layer 2, which creates an electric contact between current collector 5 and the bottom 4. This results in that said bottom 4 can operate as the negative external pole of the battery.

However, it is also possible (not shown) to provide the steel sheet material with an organic layer having openings at certain spots. During the deepdrawing of metal sheet these openings in the organic layer can be located at the bottom of the deepdrawn metal cans, and the negative current collector can be welded to the bottom in the normal way, without having to penetrate the coating layer.

Instead of coating the sheet metal material with PP or PET, the sheet metal can also be coated by a lacquer or paint. Depending on the type of organic layer used, the organic layer can be applied by lacquering, paint coating, spray coating or film coating. Various types of organic layer-material can be used, including thermosetting and thermoplastic synthetic resins. For many applications in the production of the cells it has been found that there is a preference for the use of thermoplastic resins, such a polyesters, polyolefines and polyamides and/or copolymers and mixtures thereof.

Although the organic layer may be a coating upon an untreated metal surface, a more corrosion resistant product may be obtained if the metal can consists of a metal from the group comprising low carbon steel, extra- or ultra-low carbon steel, Boron-, Titanium- or Niobium-stabilised low-carbon steel, interstitial-free steel, high-strength steel with a tensile strength of more than 350N/mm², aluminium and Al-alloys, which metal is metallically coated on at least the inside of the can with a coating from the group comprising one or more of nickel, nickel-cobalt, tin, conversion coatings and electrocoated chromium. This group may also comprise other metal coatings such as Au, Ag, Mo, Ir, Rh, W, Zn, Sn, B, Mn, Fe, Si, In, Ge, Ln, Ti, P, Ga and their alloys with nickel and/or cobalt and possibly combined with organic substances.

Preferably also the outside of the metal can, apart from the bottom portion, has been provided with an organic coating. Advantageously this outside coating of the metal can is a printable material upon which names, markings etc. can be printed.

The positive current collector 7 is electrically connected by means 11 to the cap-shaped positive pole 8. In Fig. 2 is indicated that the outer rim of positive pole 8 is provided with a plastic ring-shaped element 12, which serves to electrically isolate the positive pole 8 from the metal can 1.

The upper rim of the coated metal can 1 has been shaped with a seat 9 upon which the positive pole rests with ring-shaped element 12. After positioning the positive pole 8 the upper rim of the metal can is folded inward (see 10). The organic layer 2 thereby separates the metal can 1 and the ring-shaped element 12.

The battery is finally closed by forcing upper rim 10 towards the seat 9. Simultaneously heat is supplied sufficiently to partly melt the organic layer between the rim portion of the metal can and the ring-shaped element 12.

After cooling down a closure is obtained which prevents that electrolyte may wick around the positive pole and weep from the cell. This closure facilitates the elimination of the use of a tar-like product and will allow closer tolerances. This again removes a huge variable from the assembly process.

It was found that the new seal also remains hermetic during disposal and recycling of the battery.

## Claims

1. Method for producing a galvanic cell comprising two electrodes and an electrolyte within a closed case, in which the electrodes are each connected to an external pole and in which the case comprises a metal can which is separated from the electrolyte by an electrically insulating organic layer, in which the can is formed from a sheet of metal material, **characterised in that** the organic layer is applied by lacquering, paint coating, spray coating or film coating of the sheet of metal material.

2. Method of making a galvanic cell of the type of claim 1, comprising the steps of preparing a metal can with an organic layer covering the inner surface of the can, which layer is affixed to at least the bottom of said inner surface, filling the metal can with a positive and a negative electrode, connecting these electrodes by means of current collectors to external poles, providing an electrolyte inside the cell and closing the cell, **characterised in that** prior to providing the electrolyte, the negative current collector is electrically connected to the inner side of the metal can by spot-welding through the organic layer.

3. Method of making a galvanic cell of the type of claim 1, comprising the steps of preparing a metal can with an organic layer covering the inner surface of the can, filling the metal can with a positive and a negative electrode, connecting these electrodes by means of current collectors to external poles, providing an electrolyte inside the cell and closing the cell by means of a cap-shaped positive pole which is, electrically isolated, affixed to the upper rim of the metal can, **characterised in that** the outer rim of the cap-shaped positive pole is provided with a plastic ring-shaped element, that the upper rim of the metal can is formed to a closable seat for the cap-shaped positive pole, that upon closing the cell said positive pole is placed on said seat whereby the organic layer separates the positive pole and the rim portion of the metal can, whereupon the rim portion of the metal can is forced around the plastic ring-shaped element and heat is supplied to the forced rim portion of the metal can in order to locally soften the organic layer until the plastic rim-shaped element and the forced rim portion are affixed to each other.

## Patentansprüche

1. Verfahren zum Erzeugen einer galvanischen Zelle, die zwei Elektroden und einen Elektrolyten in einem geschlossenen Gehäuse umfasst, bei der die Elektroden jeweils mit einem äußeren Pol verbunden sind und bei der das Gehäuse eine Metallbüchse umfasst, die von dem Elektrolyten durch eine elektrisch isolierende organische Schicht getrennt ist, in der die Büchse aus einem Blech aus Metallmaterial gebildet ist, **dadurch gekennzeichnet, dass** die organische Schicht durch Lackieren, Farbbeschichten, Spritzbeschichten oder Filmbeschichten des Blechs aus Metallmaterial aufgetragen wird.

2. Verfahren zum Herstellen einer galvanischen Zelle des Typs von Anspruch 1, die folgenden Schritte umfassend:
- Vorbehandeln einer Metallbüchse mit einer organischen Schicht, die die Innenfläche der Büchse bedeckt, wobei die Schicht wenigstens an dem Boden der Innenfläche befestigt wird;
- Befüllen der Metallbüchse mit einer positiven und einer negativen Elektrode;
- Verbinden dieser Elektroden mit äußeren Polen mit Hilfe von Stromabnehmern;
- Bereitstellen eines Elektrolyten in der Zelle und Schließen der Zelle;
**dadurch gekennzeichnet, dass** vor dem Bereitstellen des Elektrolyten der negative Stromabnehmer durch Punktschweißen durch die organische Schicht hindurch elektrisch mit der Innenseite der Metallbüchse verbunden wird.

3. Verfahren zum Herstellen einer galvanischen Zelle des Typs von Anspruch 1, die folgenden Schritte umfassend:
- Vorbehandeln einer Metallbüchse mit einer organischen Schicht, die die Innenfläche der Büchse bedeckt;
- Befüllen der Metallbüchse mit einer positiven und einer negativen Elektrode;
- Verbinden dieser Elektroden mit äußeren Polen mit Hilfe von Stromabnehmern;
- Bereitstellen eines Elektrolyten in der Zelle und Schließen der Zelle mit Hilfe eines kappenförmigen positiven Pols, der, elektrisch isoliert, an dem oberen Rand der Metallbüchse befestigt wird;
**dadurch gekennzeichnet, dass** der äußere Rand des kappenförmigen positiven Pols mit einem ringförmigen Kunststoffelement ausgestattet wird, dass der obere Rand der Metallbüchse zu einem verschließbaren Sitz für den kappenförmigen positiven Pol geformt wird, dass bei Schließen der Zelle der positive Pol auf dem Sitz platziert wird, wobei die organische Schicht den positiven Pol und den Randabschnitt der Metallbüchse trennt, worauf der Randabschnitt der Metallbüchse um das ringförmige Kunststoffelement herumgepresst wird und Wärme zu dem gepressten Randabschnitt der Metallbüchse zugeführt wird, um die organische Schicht örtlich zu erweichen, bis das ringförmige Kunststoffelement und der gepresste Randabschnitt aneinander befestigt sind.

## Revendications

1. Procédé de production d'une pile galvanique comportant deux électrodes et un électrolyte dans un boîtier fermé, dans laquelle les électrodes sont toutes deux connectées à un pôle externe et dans laquelle le boîtier est constitué d'un cylindre métallique, isolé de l'électrolyte par une couche organique d'isolation électrique, boîtier dans lequel le cylindre est constitué d'une feuille de matériau métallique, procédé **caractérisé en ce que** la couche organique est appliquée par laquage, par application de peinture, par pulvérisation ou par application d'une pellicule sur la feuille de matériau métallique.

2. Procédé de fabrication d'une pile galvanique selon la revendication 1, qui comprend les étapes suivantes : préparation d'un cylindre métallique comportant une couche organique recouvrant la surface interne du cylindre, ladite couche étant collée au fond de ladite surface interne au moins, introduction d'uné électrode positive et d'une électrode négative dans le cylindre métallique, branchement de ces électrodes à l'aide de prises de courant aux pôles externes, apport d'un électrolyte à l'intérieur de la pile et obturation de la pile, procédé **caractérisé en ce qu'**avant d'introduire l'électrolyte, la prise négative de courant est connectée électriquement au côté intérieur du cylindre métallique par soudage par points à travers la couche organique.

3. Procédé de fabrication d'une pile galvanique selon la revendication 1, qui comprend les étapes suivantes : préparation d'un cylindre métallique comportant une couche organique recouvrant la surface interne du cylindre, introduction d'une électrode positive et d'une électrode négative dans le cylindre métallique, branchement de ces électrodes à l'aide de prises de courant aux pôles externes, apport d'un électrolyte à l'intérieur de la pile et obturation de la pile au moyen d'un pôle positif en forme de couvercle, isolé électriquement et collé au bord supérieur du cylindre métallique, procédé **caractérisé en ce que** le bord externe du pôle positif en forme de couvercle est doté d'un élément en matière plastique de forme annulaire, **en ce que** le bord supérieur du cylindre métallique est formé pour donner au pôle positif en forme de couvercle une surface d'appui susceptible d'être obturée, **en ce que** lors de l'obturation de la pile, ledit pôle positif est placé sur ladite surface d'appui, moyennant quoi la couche organique pourra séparer le pôle positif de la partie formant ledit bord du cylindre métallique, puis la partie formant ledit bord du cylindre métallique sera poussée en force autour de l'élément en matière plastique de forme annulaire, et de la chaleur appliquée sur la partie formant ledit bord et poussée en force du cylindre métallique, afin de ramollir localement la couche organique jusqu'à ce que l'élément en matière plastique de forme annulaire et la partie formant ledit bord et poussée en force soient collés l'un à l'autre.
